# EUROPÄISCHE PATENTSCHRIFT

(11) **EP 1 378 053 B1**
(45) Veröffentlichungstag und Bekanntmachung des Hinweises auf die Patenterteilung: **04.07.2012**
(21) Anmeldenummer: 02732355.9
(22) Anmeldetag: 26.03.2002
(51) Int. Cl.: H02P 9/02

(54) **VERFAHREN ZUR ABLEITUNG DES POLRADLAGEWINKELS**
METHOD FOR DERIVING ROTOR ANGULAR ORIENTATION
PROCEDE DE DEDUCTION DE LA POSITION ANGULAIRE DU ROTOR

(30) Priorität: 04.04.2001 DE 10116814
(43) Veröffentlichungstag der Anmeldung: 07.01.2004
(73) Patentinhaber: ROBERT BOSCH GMBH, 70442 Stuttgart (DE)
(72) Erfinder: LEHNER, Michael, 75417 Muehlacker (DE); SCHERRBACHER, Klaus, 73326 Reichenbach (DE)
(86) Internationale Anmeldenummer: PCT/DE2002/001100
(87) Internationale Veröffentlichungsnummer: WO 2002/082630

(56) Entgegenhaltungen:
- WO-A-00/31397
- DE-A- 10 036 869
- US-A- 6 112 723
- PATENT ABSTRACTS OF JAPAN vol. 1996, no. 02, 29. Februar 1996 (1996-02-29) & JP 07 286805 A (HITACHI LTD;OTHERS: 01), 31. Oktober 1995 (1995-10-31)

## Beschreibung

### Technisches Gebiet

Die Maschinenregelung eines Hochleistungsgenerators mit Startfunktion einer Drehstrom-Synchronmaschine benötigt die Information des Polradlagewinkels. Werden Inkrementalgeber eingesetzt, ist die Erfassung des Polradlagewinkels nur in bewegten/rotierenden Systemen möglich. Um das maximale Drehmoment z.B. beim Start der Verbrennungskraftmaschine zur Verfügung zu stellen, ist jedoch die Information über die Polradlage schon bei einer Drehzahl n = 0 erforderlich.

### Stand der Technik

Der Zeitschrift "System Partner 98", Seiten 64 bis 66, ist ein System zur Verringerung von Torsionsschwingungen im Antriebsstrang entnehmbar. Das System vereint zwei elektrische Maschinen in sich, die einerseits der Funktion "Start", andererseits einer Spannungsversorgung im Bordnetz von Kraftfahrzeugen dienen.. Mit der vorgeschlagenen Lösung kann die Kraft der elektrischen Maschine dazu benutzt werden, auf die Kurbelwelle des Verbrennungsmotores Momentenimpulse aufzubringen, so daß wahrnehmbare Drehungleichförmigkeiten minimiert werden können.

Die eingesetzte elektrische Maschine erzeugt eine hohe Beschleunigung des Kurbeltriebes, wobei die Verbrennungskraftmaschine bis auf Leerlaufdrehzahl beschleunigt wird; erst danach tritt die Zündung ein. Die Generatorfunktion des Systems bietet bereits bei sehr niedrigen Drehzahlen hohe elektrische Leistungen; die Drehstrommaschine wird an einem Pulswechselrichter betrieben und ist somit hinsichtlich ihrer Drehzahl und ihres Drehmomentes frei steuer- bzw. regelbar.

DE 100 36 869 A1 ist ein Verfahren zur Schätzung der Polradlage in einer Klauenpolmaschine entnehmbar. Diese Erfindung bezieht sich auf ein Verfahren zur Bestimmung der Lage einer rotierenden Komponente einer Klauenpolmaschine, die im RST-System betrieben wird und zu deren Regelung die Transformation der Ständergrößen aus dem RST-System in das d, q-System und umgekehrt erforderlich ist. Die Klauenpolmaschine als Gesamtsystem wird in ein unbeobachtbares Untersystem und ein ein Filterelement enthaltendes beobachtbares Untersystem unterteilt. Das im beobachtbaren Untersystem enthaltene Filterelement liefert die Ausgangsgrößen.

Die WO 00/31397 A offenbart ein Verfahren, in dem die Winkelposition einer Kurbelwelle eines Verbrennungsmotors bestimmt wird. Anhand dieser Information wird ermittelt, in welcher Position sich die Zylinder des Motors befinden. Die Position eines Zylinders beim Start des Verbrennungsmotors definiert, wann die Einspritzung von Treibstoff und dessen Zündung erfolgen soll.

Das Verfahren gemäß der WO 00/31397 A ermittelt somit zu Beginn eines Motorstartvorgangs, die Lage der Zylinder, um so früh wie möglich Einspritzung und Zündung optimal anzusteuern.

Die WO 00/31397 A offenbart lediglich die Bedeutung der Zylinderlage für die Einspritzung und Zündung. Die Rolle der Polradlage eines elektrischen Startermotors bei einem Startvorgang wird nicht offenbart.

Das vorgeschlagene Verfahren gemäß dem Stand der Technik gestattet die Polradlagebestimmung erst bei Rotation der Verbrennungskraftmaschine, so daß die Suchrunde den Startvorgang bei Einsatz von Hochleistungsgeneratoren unzulässig verlängert und den durch Einsatz dieser Hochleistungsmaschinen erzielbaren Antriebsvorteil teilweise wieder zunichte macht.

### Darstellung der Erfindung

Mit dem erfindungsgemäß vorgeschlagenen Verfahren nach Anspruch 1 läßt sich die Suchrunde durch Auswertung bereits im Motorsteuergerät zur Verfügung stehender Daten im Idealfall vollständig eliminieren. Durch die weitestgehend feste, bekannte Kopplung des Kurbeltriebes und der elektrischen Maschinen durch einen Riementrieb, stehen die Polradlage und die Drehlage der Kurbelwelle der Verbrennungskraftmaschine in einem festen bekannten Verhältnis zueinander.

Beim Abstellen der Verbrennungskraftmaschine kann die Drehlage der Kurbelwelle der Verbrennungskraftmaschine im Motorsteuergerät erfaßt und dauerhaft gespeichert werden.

Die Speicherung der letzten aktuellen Drehlageinformation kann in einem Speicher geschrieben werden, der diese. Information auch beibehält, wenn die Stromversorgung des Motorsteuergerätes unterbrochen wird. Beim nächsten Anlaßvorgang der Verbrennungskraftmaschine steht somit ein genauer Wert für die Kurbelwellenwinkellage der Verbrennungskraftmaschine zur Verfügung, so daß die Startphase einer Verbrennungskraftmaschine durch Entfall der Suchrunde drastisch verkürzt werden kann.

Im Vergleich zu bisherigen Lösungen des Standes der Technik kann das Zurückgreifen auf beim vorhergehenden Abstellen der Verbrennungskraftmaschine gewonnene Drehlageinformation derselben eine den Anlaßvorgang vorhergehende Suchrunde entweder vollständig überflüssig machen, so daß die Verbrennungskraftmaschine direkt mit dem erforderlichen Drehmoment angelassen werden kann, oder der Startwert für den Beginn der Such-runde kann so gewählt werden, daß die Suchrunde in zeitlicher Hinsicht drastisch verkürzt und hinsichtlich des überstrichenen Winkels kleingehalten werden kann.

Damit läßt sich der in der hinsichtlich der Polradlage zu synchronisierenden elektrischen Drehfeldmaschine wie z.B. einem Hochleistungsgenerator in diesem ein Absolutwinkelgeber einsparen. Verbrennungskraftmaschine und elektrische Drehstrommaschine stehen in einem fest vorgegebenen Kopplungszusammenhang miteinander, z.B. über einen Riementrieb, der unter entsprechender Vorspannung gehalten ist, um Schlupf auszuschließen. Wird die Verbrennungskraftmaschine abgestellt, ist über das Übersetzungsverhältnis des Riementriebes, die Riemenlänge, der Durchmesser der Riemenscheibe der elektrischen Drehfeldmaschine sowie des Durchmessers der Kurbelwellen seitlich montierten Riemenscheibe die Polradlage an die der kurbelwellenseitigen Riemenscheibe gekoppelt. Daraus kann in einer Abgleichoperation die Polradlage mit der Drehlage der Verbrennungskraftmaschine abgeglichen werden; da diese Operation bei einer Drehzahl n = 0 erfolgt, werden die Einflüsse der Kopplung - beim hier ausgewählten Riementrieb das Auftreten von Schlupf - unterdrückt.

### Zeichnung

Anhand der Zeichnung wird die Erfindung nachstehend eingehender beschrieben.

Es zeigt:
- Figur 1: den Drehlageverlauf der Kurbelwelle einer Verbrennungskraftmaschine, aufgetragen über der Zeit,
- Figur 2: den Drehlageverlauf des Polrades eines Hochleistungsgenerators ebenfalls aufgetragen über der Zeit,
- Figur 3: den Abgleich zwischen Motorsteuergerät der Verbrennungskraftmaschine und der elektrischen Maschine und
- Figur 4: die Ableitung des Polradlagewinkels aus der Drehlageinformation der Verbrennungskraftmachine zu gegebenenfalls erforderlichen Aktivierung einer Suchrunde.

### Ausführungsvarianten

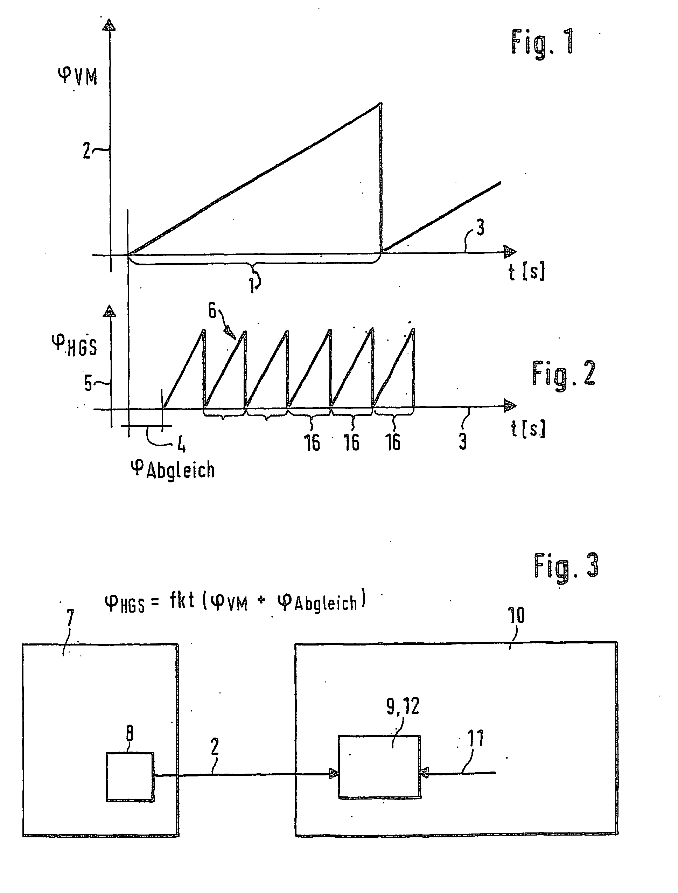

Figur 1 zeigt den Drehlageverlauf der Kurbelwelle einer Verbrennungskraftmaschine aufgetragen über die Zeitachse.

Der Darstellung in Figur 1 ist der für eine Kurbelwellenumdrehung charakteristische Verlauf des Kurbelwellenwinkels 2 wiedergegeben. Der sich einstellende, für einen Kurbelwellenwinlcel 1 (t_{KW}) sich einstellende sägezahnförmige Verlauf stellt eine komplette Kurbelwellenwinkelumdrehung von 0° bis 360° dar. Dieser Verlauf stellt sich periodisch ein, wobei die Zeiten, die zu einer vollständigen Umdrehung der Kurbelwelle erforderlich sind, mit wachsender Drehzahl der Verbrennungskraftmaschine kontinuierlich abnehmen.

Der Darstellung gemäß Figur 2 ist der Drehlageverlauf des Polrades einer elektrischen Drehstrommaschine wie z.B. eines Hochleistungsgenerators, ebenfalls ausgetragen über die Zeitachse 3, entnehmbar.

Abhängig von der Kopplung der elektrischen Drehstrommaschine 10 mit der Verbrennungskraftmaschine stellt sich ein weitestgehend fester Zusammenhang zwischen einer vollständigen Umdrehung des Polrades der elektrischen Drehstrommaschine und der Kurbelwelle ein. Im in Figur 2 dargestellten Beispiel dreht sich das Polrad der elektrischen Drehfeldmaschine während einer kompletten Umdrehung der Kurbelwelle der Verbrennungskraftmaschine sechsmal. Die jeweils komplette Umdrehung des Polrades der elektrischen Drehstrommaschine ist mit Bezugszeichen 16 dargestellt. Ein Vergleich der Winkellageverläufe gemäß Figur 1 und Figur 2 zeigt, daß das Sägezahnprofil 6, um einen zeitlichen Verzug, der dem Winkelabgleichbereich 4 entspricht, verschoben ist.

In einem Motorsteuergerät, welches der Verbrennungskraftmaschine zugeordnet ist, läßt sich der Zusammenhang zwischen dem Drehwinkel 2 der Verbrennungskraftmaschine und dem Drehwinkel 5 der elektrischen Drehstrommaschine abhängig von der Riemenlänge, abhängig von den Durchmessern der Riemenscheiben und der im Normalfall im Riementrieb herrschenden Spannung als Kennlinienfeldzusammenhang ablegen.

Figur 3 zeigt den Abgleich zwischen Motorsteuergerät der Verbrennungskraftmaschine und der elektrischen Maschine hinsichtlich der Drehlageinformation.

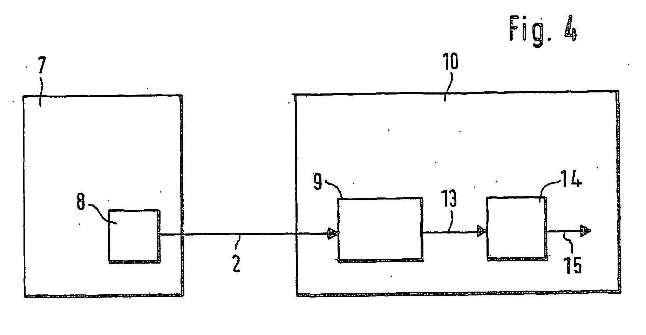

Ein Motorsteuergerät 7, welches einer Verbrennungskraftmaschine zugeordnet ist, erfaßt dessen Betriebsparameter, Daneben sind am hier schematisch wiedergegebenen Motorsteuergerät 7 Speicherbereiche vorgesehen, in denen Kennlinienzusammenhänge wie z.B. der oben erwähnte Kennlinienzusammenhang für den Riementrieb der elektrischen Drehstrommaschine abgelegt ist Beim Abstellen der Verbrennungskraftmaschine wird die Lage des Kurbeltriebes, d.h. der Kurbelwelle, durch das Motorsteuergerät 7 ermittelt und in diesem dauerhaft abgespeichert. Die Abspeicherung erfolgt bevorzugt derart, daß auch bei Unterbrechung der Stromzufuhr zum Motorsteuergerät 7, d.h. dem Abstellen der Verbrennungskraftmaschine, die letzte aktuelle Lage des Kurbeltriebes gespeichert wird. Diese Drehlageinformation 2 steht beim Wiederanlassen der Verbrennungskraftmaschine durch die elektrische Drehstrommaschine 10, z.B. ein Hochleistungsgenerator zur Auswertung zur Verfügung. Dazu wird von einem Positionsmeldung 8 innerhalb des Motorsteuergerätes 7 die Drehlägeinformation 2 an eine Synchronisationsstufe 9 der elektrischen Drehstrommaschine 10 übermittelt, in der ein Abgleich der von Drehinformation 2 der Verbrennungskraftmachine, der Winkelstellung des Kurbeltriebes und als weitere Eingangsgröße, dem Polradlagewinkel 11 vorgenommen werden kann. Durch die Kopplung von Verbrennungskraftmaschine und der elektrischen Drehstrommaschine beispielsweise über einen Riementrieb, sind die Polradlage 5 sowie die Drehlage 2 der Verbrennungslcraftmaschine in einem festen Verhältnis zueinander vorgegeben, so daß im Rahmen der Synchronisationsstufe eine Anpassung der Polradlage 5 ϕ_{HGS} als Funktion der Drehlageinformation 2 (ϕ_{VM}) und des Abgleichwinkels (ϕ_{Abgleich}) vorgenommen werden kann. Bei hinreichender Genauigkeit der vom Motorsteuergerät 7 übermittelten Drehlageinformation 2 des Kurbeltriebes der mit der elektrischen Drehstrommaschine 10 gekoppelten Verbrennungskraftmaschine kann eine Suchrunde 14 (vergleiche Darstellung gemäß Figur 4) entfallen.

Der in der Synchronisationsstufe 9 erfolgende Abgleich zwischen der Drehlageinformation 2 (ϕ_{VM}) und des Polradlagewinkels 5 (ϕ_{HGS}) erfolgt bei der Drehzahl der Verbrennungskraftmaschine = 0 so daß die Einflüsse der Kopplung zwischen Verbrennungskraftmaschine und zugehöriger elektrischer Drehstrommaschine 10 weitestgehend unberücksichtigt bleiben können. Ein solcher den Abgleich erschwerender Einfluß wäre z.B. sich einstellender Schlupf zwischen der Riemenscheibe an der Kurbelwelle der Verbrennungskraftmaschine und der die elektrische Drehstrommaschine 10 antreibenden Riemenscheibe. Da der Abgleichvorgang jedoch bei der Drehzahl n = 0 entfällt, verfälscht sich im Betrieb einstellender Schlupf im Riementrieb der in Zusammenhang zwischen der Drehlageinformation 2 der Verbrennungskraftmaschine und der Polradlage der elektrischen Drehstrommaschine nicht.

Aus der Darstellung gemäß Figur 4 geht die Ableitung des Polradlagewinkels aus der Drehlageinformation der Verbrennungskraftmaschine zu gegebenenfalls erforderlichen Durchführung einer Suchrunde hervor.

Analog zur Darstellung gemäß Figur 3 übermittelt das Motorsteuergerät 7 über den in diesem integriertem Positionsmelder 8 die Drehlageinformation 2, d.h. den Kurbelwellenwinkel der Verbrennungskraftnaschine an die elektrische Drehstrommaschine 10 z.B. einen Hochleistungsgenerator. Die Drehlageinformation 2 (ϕ_{VM}) dient als Eingangsgröße für eine Synchronisationsstufe 9, die in der Drehstrommaschine 10 vorgesehen ist. In der Synchronisationsstufe 9 wird ein Startwert 13 für eine Suchrunde 14 ermittelt. Abhängig von den übermittelten Werten der Drehlageinformation 2 der Verbrennungskraftmaschine durch den Positionsmelder 8 des Motorsteuergerätes 7 kann der Startwert 13 für die durchzuführende Suchrunde 14 so gewählt werden, daß die Suchrunde 14 sowohl zeitlich als auch vom überstrichenen Winkelbereich her kurz bzw. klein gehalten werden kann. Mit der Eingangsinformation der Drehlage 2 des Kurbeltriebes der Verbrennungskraftmaschine kann die Suchrunde 14 deutlich verkürzt werden bzw. im Idealfall (vergleiche Darstellung gemäß Figur 3) vollständig entfallen.

Wird die Drehlageinformation 2 der Verbrennungskraftmaschine mittels Absolutwinkelsensoren in der Verbrennungskraftmaschine ermittelt, kann der Abgleich in der Synchronisationsstufe 9 in vorteilhafter Weise optimiert werden. Daneben lassen sich Absolutwinkelgeber, die sonst in der elektrischen Drehstrommaschine 10 vorzusehen werden, einsparen.

Als Ergebnis der anhand des Startwertes 13, vorgegeben durch die Synchronisationsstufe 9, abhängig von deren Drehlageinformation 2 der Verbrennungskraftmaschine, wird eine Polradlagewinkelinformation 15 generiert, welche die elektrische Drehstrommaschine 10 zur Erzeugung des größten zum Start erforderlichen Drehmomentes und zur Verkürzung des Startvorganges einnehmen sollte.

Mit dem erfindungsgemäß vorgeschlagenen Verfahrens daß bei der Drehzahl der Verbrennungskraftmaschine n = 0 durchgeführt wird, kann die Dauer der Suchrunde 14 erheblich eingeschränkt werden, da sie auf ein Fenster beschränkt ist, welches durch den Positionsmelder 8 über das Motorsteuergerät 7 beschränkt ist. Eine unzulässige Verlängerung des Startvorganges einer Verbrennungskraftmaschine mittels einer elekrischen Drehstrommaschine 10 wie beispielsweise eines Hochleistungsgenerators kann nun bei Einsatz des erfindungsgemäß vorgeschlagenen Verfahrens im Idealfall (vergleiche Darstellung gemäß Figur 3) entfallen.

Ist hingegen eine Suchrunde 14 erforderlich, kann diese in zeitlicher und hinsichtlich des Suchfensters so beschränkt werden, daß das Auftreten unerwünschter Ereignisse beim während der Suchrunde 14 erfolgenden Durchdrehen des Kurbeltriebes der Verbrennungskraftmaschine weitestgehend ausgeschlossen werden kann.

### Bezugszeichenliste

- 1: t_{KW} = Kurbelwellenumdrehung
- 2: Drehlageinformation Verbrennungskraftmaschine
- 3: Zeitachse
- 4: Winkelabgleichbereich
- 5: Polradlagewinkel
- 6: Sägezahnprofil
- 7: Motor-Steuergerät
- 8: Positionsmelder
- 9: Synchronisations-Stufe
- 10: Elektrische Drehstrommaschine
- 11: Eingangsgröße Polradlagewinlcel
- 12: Abgleich
- 13: Startwert
- 14: Suchrunde
- 15: Polradlagewinkel-Ausgangswert
- 16: Umdrehung elektrische Maschine

## Patentansprüche

1. Verfahren zur Bestimmung des Polradlagewinkels einer Drehstrom-Synchronmaschine (10) anhand von Lageinformationen (2) einer Verbrennungskraftmaschine, welche mit einem Motorsteuergerät (7) versehen ist, in welchem Betriebsparameter und Lageinformationen von Komponenten der Verbrennungskraftmaschine abgespeichert werden, mit nachfolgenden Verfahrensschritten:
- Dem Erfassen der Drehlage der Verbrennungskraftmaschine beim Abstellen derselben im Motor-Steuergerät (7),
- Der Übermittlung der Drehlageinformation (2) der Verbrennungskraftmaschine an die elektrische Drehstrommaschine (10) zum Abgleich zwischen Drehlageinformation (2) und dem Lagewinkel (5) der elektrischen Drehstrommaschine (10) bei Drehzahl der Verbrennungskraftmaschine n = 0,
wobei die elektrische Drehstrommaschine (10) und die Verbrennungskraftmaschine miteinander gekoppelt sind.

2. Verfahren gemäß Anspruch 1, **dadurch gekennzeichnet, daß** eine Drehlagebestimmung der elektrischen Drehstrommaschine vor dem Startvorgang im Rahmen einer Suchrunde (14) erfolgt.

3. Verfahren gemäß Anspruch 1, **dadurch gekennzeichnet, daß** durch die Vorgabe der Drehlageinformation (2) der Verbrennungskraftmaschine vom Motor-Steuergerät (7) der Start der Verbrennungskraftmaschine direkt erfolgt.

4. Verfahren gemäß Anspruch 1, **dadurch gekennzeichnet, daß** beim Abstellen der Verbrennungskraftmaschine die Drehlageinformation (2) der Verbrennungskraftmaschine durch den Einsatz von Absolutwinkelsensoren ermittelt wird.

5. Verfahren gemäß Anspruch 1, **dadurch gekennzeichnet, daß** beim Abschalten der Verbrennungskraftmaschine die der Drehlage der Verbrennungskraftmaschine entsprechende Information (2) erhalten und beim Start der Verbrennungskraftmaschine auf diese zugegriffen werden kann.

## Claims

1. Method for determining the rotor position angle of a three-phase synchronous machine (10) on the basis of position information (2) of an internal combustion engine which is provided with an engine controller (7) in which operating parameters and position information of components of the internal combustion engine are stored, comprising the following method steps:
- detecting the rotary position of the internal combustion engine when said internal combustion engine is turned off in the engine controller (7),
- transmitting the rotary position information (2) of the internal combustion engine to the electrical three-phase machine (10) for comparing the rotary position information (2) and the position angle (5) of the electrical three-phase machine (10) at a rotation speed of the internal combustion engine of n = 0,
with the electrical three-phase machine (10) and the internal combustion engine being coupled to one another.

2. Method according to Claim 1, **characterized in that** the rotary position of the electrical three-phase machine is determined before the starting process as part of a test run (14).

3. Method according to Claim 1, **characterized in that** the internal combustion engine is started directly by the engine controller (7) on account of the rotary position information (2) of the internal combustion engine being prespecified.

4. Method according to Claim 1, **characterized in that**, when the internal combustion engine is turned off, the rotary position information (2) of the internal combustion engine is ascertained by the use of absolute angle sensors.

5. Method according to Claim 1, **characterized in that**, when the internal combustion engine is switched off, the information (2) corresponding to the rotary position of the internal combustion engine can be obtained and this information can be accessed when the internal combustion engine is started.

## Revendications

1. Procédé de détermination de la position angulaire du rotor d'un moteur synchrone à courant triphasé (10) à l'aide d'informations de positionnement (2) d'un moteur à combustion interne pourvu d'un appareil de commande du moteur (7), dans lequel des paramètres de fonctionnement et des informations de positionnement de composantes du moteur à combustion interne sont mémorisés, avec les étapes de procédé suivantes :
- détection de la position de pivotement du moteur à combustion interne lors de l'arrêt de celui-ci dans l'appareil de commande du moteur (7) ;
- transmission des informations de position de pivotement (2) du moteur à combustion interne au moteur électrique à courant triphasé (10) pour réaliser une compensation entre les informations de position de pivotement (2) et la position angulaire (5) du moteur électrique à courant triphasé (10) lorsque le nombre de tours du moteur à combustion interne n = 0 ;
le moteur électrique à courant triphasé (10) et le moteur à combustion interne étant couplés l'un à l'autre.

2. Procédé selon la revendication 1, **caractérisé en ce qu'**une détermination de la position de pivotement du moteur électrique à courant triphasé est réalisée avant le processus de démarrage dans le cadre d'un cycle de recherche préalable (14).

3. Procédé selon la revendication 1, **caractérisé en ce que** le démarrage du moteur à combustion interne se produit directement par le biais des informations de position de pivotement (2) du moteur à combustion interne préconisées par l'appareil de commande du moteur (7).

4. Procédé selon la revendication 1, **caractérisé en ce que** lors de l'arrêt du moteur à combustion interne, les informations de position de pivotement (2) du moteur à combustion interne sont calculées par le biais de l'utilisation de capteurs d'angle absolu.

5. Procédé selon la revendication 1, **caractérisé en ce que** lors de la déconnexion du moteur à combustion interne, les informations (2) correspondant à la position de pivotement du moteur à combustion interne sont collectées et **en ce que** ces informations peuvent être réutilisées lors du démarrage du moteur à combustion interne.
